# EUROPEAN PATENT APPLICATION

(11) **EP 3 477 816 A1**
(43) Date of publication of application: **01.05.2019**
(21) Application number: 17814794.8
(22) Date of filing: 21.06.2017
(51) Int. Cl.: H02J 50/10, H01F 27/30, H02G 9/00, H01R 11/00

(54) **INDUCTIVE WIRING SYSTEM FOR WIRELESS POWER SUPPLY**

(30) Priority: 22.06.2016 ES 201600454 U
(71) Applicant: Laserna Larburu, Santos Francisco, 39700 Castro Urdiales (Cantabria) (ES)
(72) Inventor: Laserna Larburu, Santos Francisco, 39700 Castro Urdiales (Cantabria) (ES)
(74) Representative: Pons
(86) International application number: PCT/ES2017/000078
(87) International publication number: WO 2017/220825

(57) **Abstract**

The present invention presents an inductive wiring system for the power supply of wireless devices, that only requires running a single cable conduit (5), only in an outgoing direction, the same as in a conventional installation. It also considers running a two-way wiring, but in this case, the "outgoing wire" (1) will be closely placed together with the "return wire" (2).

Thus, in the case of wishing to supply beacons placed on pavements or walls, it will only be necessary to cut a groove in the pavement or wall for its placement, except at those points where the beacons will be placed. At these points, a loop of wire (3) will be coiled one or several times that will generate a variable magnetic field in its vicinity, because of which energy can be transferred wirelessly to other devices through electromagnetic induction. To ensure that the inductive value of this wire loop (3) can be predetermined, and is not random, a solid support part (4) will be used on which the wire will be coupled so that the wire loops (3) adopt a homogeneous shape and, therefore, said wire loops (3) will have almost the same value of inductive coefficient (L). This support part (4) will also serve as a reference for the separation distance between the loops and the devices to be supplied.

## Description

The objective of this invention is a wiring system that allows to supply advantageously beacons or wireless lamps placed on flat solid surfaces, either horizontal such as roofs, motorways, or pavements, or vertical such as partitions, walls, or dykes.

### Prior Definitions

For a better understanding, the relevant terms often used in this document are defined below:
**Wireless lamp:** Lamp according to the utility model ES-1123205_U or similar, which has the quality of being able to be supplied remotely by an inductive source, and, therefore, does not need a socket or electrical connections on its surface.
**Inductive wiring:** Current conduction system formed by one or more conductors or electrical wires through which a high-frequency alternating current will circulate.

### Field of application of the invention

The field of application of the present invention is primarily within the technical sector of the electric lighting industry.

### State of the art

During recent years, "inductive power sources", also known as "wireless feeders", have started to become relevant. An inductive power source is created by an electrical inductor winding through which a variable current flows. As a result, a variable magnetic field is generated around the mentioned inductive power source. By bringing another electrical winding close to the inductive power source, as a result of the phenomenon of electromagnetic induction, a current (called induced current) is generated, which is variable and analogous to the current passing through the inductor winding of the power source.

This current induced in the winding allows the supply of electrical appliances in the same way as the current generated in a connection to two poles of different potential. However, at the moment, there are very few electrical devices that can be supplied from an inductive electrical source or wireless supplier.

In the field of the art relating to the power supply to wireless lamps, the inductive current sources can become the power supply wires themselves, without the need to use specific coils as inductors. The advantage of a wireless power supply has already originated the appearance of various patents and has resulted in power supply systems through underground wires that feed the surface beacons.

The author of this invention has registered a related utility model with reference number U201500443 regarding the power supply through inductive wiring. There are also patents such as the US 2002008973 which choose to bury the wires, being these wires the inducers of the current in the wireless beacons of the surface.

However, the present invention proposes an ingenious system of wiring, either on the surface or underground, which differs from the wiring described in previous inventions, which is totally new and increases the effectiveness of the wireless power supply to the beacons or wireless lamps.

### Description of the Invention

The present invention presents an inductive wiring system for the power supply to wireless devices, that only requires running a single wire conduit, only in the outgoing direction, as in a conventional installation. It also considers running a two-way wiring, but in this case, the "outgoing wire" will be placed closely together with the "return wire".

Thus, in the case of wishing to supply beacons placed on pavements or walls, it will only be necessary to cut a groove in the pavement or wall for its installation, except at those points where the beacons will be placed. At these points, a loop of wire will be coiled one or several times that will generate a variable magnetic field in its vicinity, because of which energy can be transferred wirelessly to other devices through electromagnetic induction. To ensure that the inductive value of this wire loop can be predetermined, and is not random, a solid support part will be used on which the wire will be coupled so that the wire loops adopt a homogeneous shape and, therefore, said wire loops will have almost the same value of inductive coefficient (L). This support part will also serve as a reference for the separation distance between the loops and the devices to be supplied.

Along the sections without beacons or wireless lamps, the outgoing and return current will circulate through the wires inside the conduit, separated by a few millimetres between them. This disposition makes it possible that the losses due to inductive impedance are smaller in the linear sections of wire so that the voltage losses due to inductive impedance of the total wiring are decreased. As a result, the efficiency of the wiring is greater than in a two-way installation in which the outgoing wire is installed separately from the return wire.

In the case of pavement beacons for which pavement grooving and buried wire are chosen, a circular or rectangular recess will be made at the beacon points, usually at the same or greater depth as the linear groove along the sections without beacons, and a wire loop will be placed in said recess.
For rooftop installations, the wire will lie on the roof, and the wire loop will be previously located at the specific areas where the wireless lamps will be installed.
The wire loop will be formed when placed on the "support part", a key element in this invention, thus forming a coil that is normally quasi-circular or optionally polygonal in shape. The shape of the coil is consequently determined by the shape of this support part.

The wire support part is a piece of a rigid material (wood, plastic, metal..) on which the wire is coupled or fitted.
The purpose of this piece is multiple:
- It provides a homogeneous shape to all the coils formed by bending the wire and that will be repeated this way throughout the installation
- It allows to know the inductive impedance of each wire loop made, and therefore allows the calculation of the total installation impedance
- It facilitates the positioning and attaching of the wire loop on the perforated pavement, or the supporting surface in each case, such as on a ceiling, wall, floor, or any other place
- It serves as a positioning reference (distance) with respect to the supporting plane of the wireless lamp

As a result, the inductive wiring system of the invention presents the following advantages:
- It allows supplying beacons and wireless lamps in a way that the magnetic field is homogeneous for all of them. The field homogeneity is achieved thanks to the geometrically equal shape of all the wire coils formed by winding the wire on the support part. The field homogeneity is also achieved thanks to the fact that these coils formed with the wire will be at the same distance from the wireless lamps, since the support part will serve as a supporting reference.
- It allows the pre-calculation of the total installation inductive impedance, since knowing the number of beacons also indicates the number of coils available in the installation. The total impedance will be directly related to the sum of the impedances of each homogeneous winding formed this way.
- It allows the reduction of the electromagnetic radiation areas, thus decreasing the energy consumed at rest and stabilising the final consumption of the installation.

The material or the shape of the support part, or the material or the shape of the wire are not limiting of the present invention.

For experts in the field, other tasks, variants, advantages, and features of the invention will be derived in part from the description and in part from the practical use of the invention. The following examples and drawings are provided as illustrations, and are not intended to restrict the present invention.

### A brief description of the figures

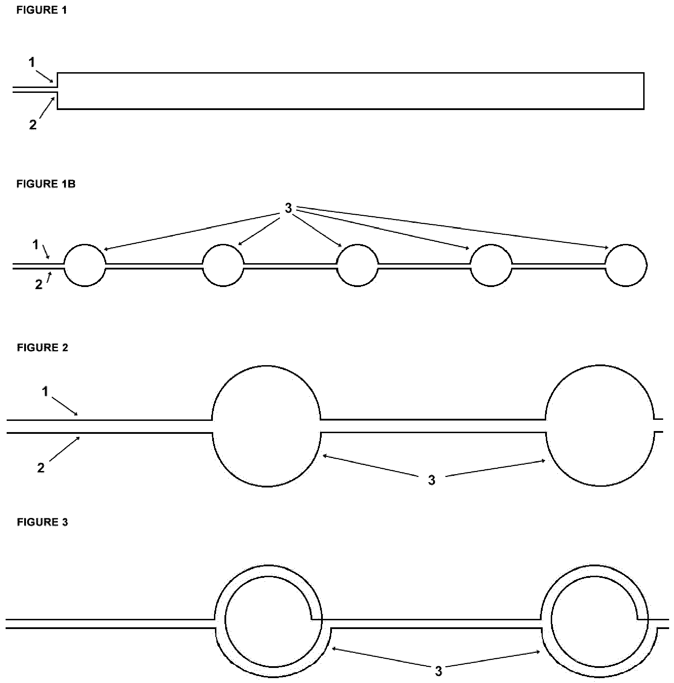

**Figure 1** shows a parallel disposition of inductive wiring according to state of the art, which presents an inducing area along its entire length, which generates a relatively large inductive impedance which increases on increasing the distance travelled by the wiring.
**Figure 1B** shows one of the proposed inventive solutions, lacking the support part, in which the outgoing and return wires remain together except in the sections where a wireless beacon will be placed. In such sections, the wire presents a curve, winding, or wire loop (3) that induces a magnetic field.
**Figure 2** is an enlarged detail of Figure 1B
**Figure 3** is a variant of Figure 2 in which the wire is coiled twice around the support forming a wire loop (3) of greater inductive impedance.

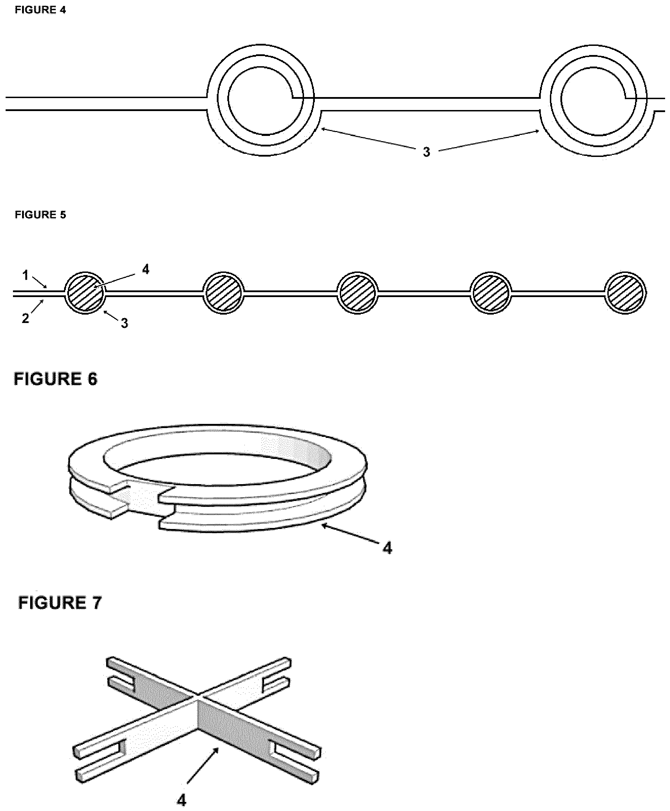

**Figure 4** is a variant of Figure 2 in which the wire is coiled three times around the support forming a wire loop (3) of greater inductive impedance.
**Figure 5** graphically presents the support parts (4) on which the outgoing and return wire will be supported to form a homogeneous wire loop (3). This figure shows one of the proposed inventive solutions in its entirety.
**Figure 6** shows a three-dimensional example of the circular support part (4)
**Figure 7** shows a three-dimensional example of the support part (4) in the shape of a cross

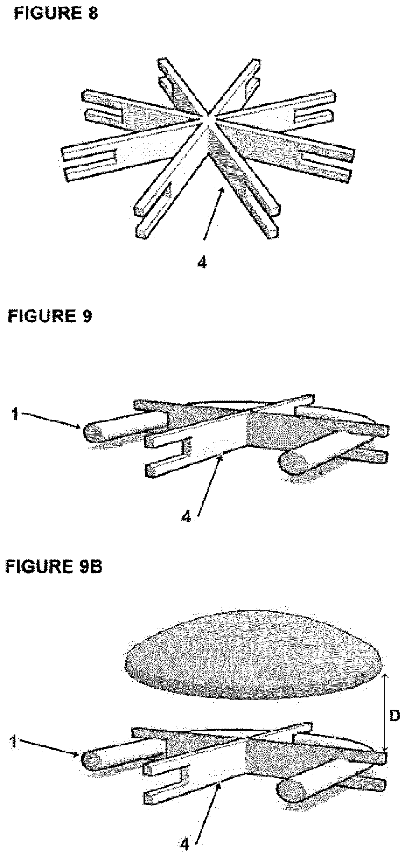

**Figure 8** shows a three-dimensional example of the support part (4) in the shape of a star
**Figure 9** shows a three-dimensional example of the support part (4) in the form of a cross, which shows how the wire can be fitted to form the wire loop. In this case, an example is shown forming the loop with the outgoing wire itself (1).
**Figure 9B** is a variant of Figure 9 in which it can be seen that the support part (4) also serves to provide a relative distance (D) with respect to the wireless lamp or beacon to be supplied from the wire loop

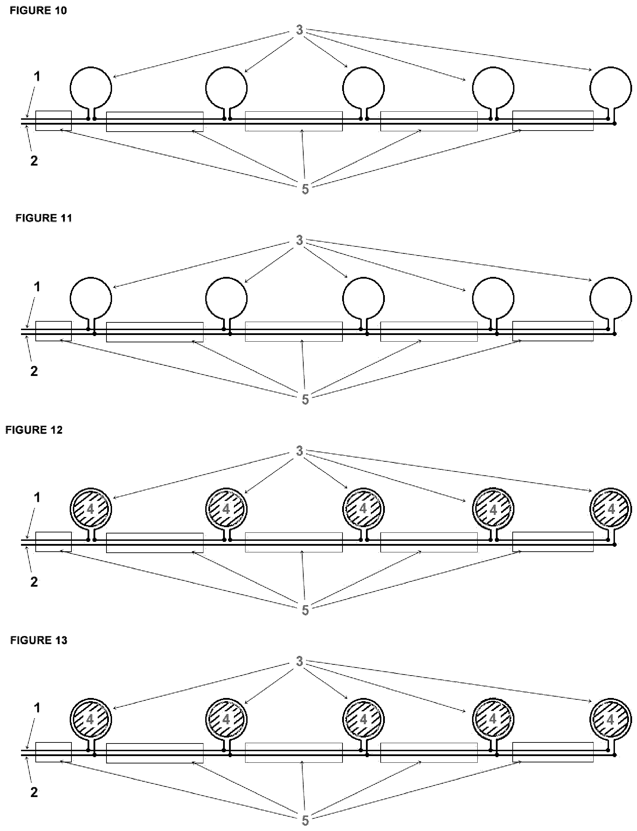

**Figure 10** is a variant of Figure 1B, in which the outgoing and return wires stay together within the same conduit (5). In the sections where a beacon or wireless lamp will be placed, a wire loop (3) will be connected with an electrical arrangement "in series".
**Figure 11** is a variant of Figure 1B, in which the outgoing and return wires stay together within the same conduit (5). In the stages where a beacon or wireless lamp will be placed, a wire loop (3) will be connected with an electrical arrangement "in parallel".
**Figure 12** is a variant of Figure 10, in which already appears another of the complete proposed inventive solutions, which comprises an outgoing wire (1) and a return wire (2) both within a single conduit (5). To this conduit (5) will be connected the wire loops (3) formed around the support part (4), with an electrical configuration "in series".
**Figure 13** is a variant of Figure 11, in which already appears another of the complete proposed inventive solutions, which comprises an outgoing wire (1) and a return wire (2) both within a single conduit (5). To this conduit (5) will be connected the wire loops (3) formed around the support part (4), with an electrical configuration "in parallel".

## Claims

1. Inductive wiring system that is **characterised by** comprising sections in which the outgoing cable (1) is installed together with the return cable (2), and inductive sections in which the cable forms a homogeneous loop of cable (3) thanks to a support piece (4) on which the loop of cable (3) fits and adapts.

2. Inductive wiring system according to the claim 1 in which the outgoing cable (1) and the return cable (2) are together within a single conduit (5) along all the sections where there are no cable loops (3) connected.

3. Inductive cable system according to the claim 1 in which the outgoing cable (1) rests together with the return cable (2) in parallel

4. Inductive wiring system according to the previous claims in which the cable loops (3) form an electrical configuration in series.

5. Inductive wiring system according to the previous claims in which the cable loops (3) form an electrical configuration in parallel.

6. Inductive wiring system according to the previous claims in which the support piece (4) is made of rigid material.

7. Inductive wiring system according to the previous claims in which the support piece (4) adopts the shape of a star.

8. Inductive wiring system according to the previous claims in which the support piece (4) adopts the shape of a cross.

9. Inductive wiring system according to the previous claims in which the support piece (4) adopts a circular shape.

10. Inductive wiring system according to the previous claims in which the support piece (4) adopts a polygonal shape.

## Amended claims

### Amended claims under Art. 19.1 PCT

1. Inductive wiring system of the type used to supply wireless power electrical devices, **characterized in that** it comprises wire loops (3) that are homogeneous in shape and inductive value, formed by the winding of the outgoing wire (1) itself and/or the return wire (2) on some support parts (4) designed specifically so that the outgoing wire (1) and/or the return wire (2) adjust and/or fit onto them, support parts (4) that also serve as a base for the electrical device intended to be supplied wirelessly, electrical device that will remain supported at a homogeneous distance from the wire loop (3) thanks to the stable shape of the support parts (4).

2. Inductive wiring system according to Claim 1 in which the support part (4) adopts the shape of a star, and where the ends of the segments of the stars are designed in U-shape so that the wire fits and/or adjusts onto them.

3. Inductive wiring system according to Claim 1 in which the support part (4) adopts a circular or polygonal shape, and where the ends of the support part (4) are designed in U-shape so that the wire fits and/or adjusts onto it.
